Europäisches Patentamt
European Patent Office
Office européen des brevets

(19) (11) Publication number: **0 156 646**
**B1**

(12) **EUROPEAN PATENT SPECIFICATION**

(45) Date of publication of patent specification: **06.07.88**

(51) Int. Cl.[4]: **C 07 C103/70**, C 07 C102/00, C 08 F 20/60

(21) Application number: **85302144.2**

(22) Date of filing: **27.03.85**

(54) **High charge density, cationic methacrylamide based monomers and their polymers.**

(30) Priority: **28.03.84 US 594160**

(43) Date of publication of application: **02.10.85 Bulletin 85/40**

(45) Publication of the grant of the patent: **06.07.88 Bulletin 88/27**

(84) Designated contracting states: **BE CH DE FR GB IT LI NL**

(56) References cited:
**EP-A- 0 099 694**
**DE-A- 3 013 067**
**GB-A- 2 091 320**
**GB-A- 2 115 829**
**US-A- 4 415 717**

(73) Proprietor: **HI-TEK POLYMERS, INC. (a Georgia corporation)**
**1 Riverfront Plaza**
**Louisville, Kentucky 40202 (US)**

(72) Inventor: **Dammann, Laurence G.**
**5604 Montfort Lane**
**Crestwood Kentuky (US)**

(74) Representative: **De Minvielle-Devaux, Ian Benedict Peter et al**
**CARPMAELS & RANSFORD 43, Bloomsbury Square**
**London WC1A 2RA (GB)**

EP 0 156 646 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

The invention relates to quaternary ammonium monomer, to homopolymers and copolymers thereof, and to a process for preparing such monomer.

Quaternary ammonium monomers of the acrylamide or methacrylamide types are disclosed in U.S. Patent No. 4 387 017 and British Patent No. 2 091 320. These disclose diquaternary ammonium salt containing acrylamide monomers and polymers. Such monomers are made, for example, by reacting dimethylaminopropyl acrylamide with 1-chloro-2-hydroxypropyl trimethylammonium chloride. Polymers made from these monomers have high charge densities and find applications as flocculants, paper sizes, electroconductive aids and in oil well drilling operations.

U.S. Patent No. 4 009 201 describes polymerizable cationic monomers which contain 2 or more cationic groups in each molecule. Such monomers are acrylic acid ester monomers and contain a hydrolytically unstable ester linkage. The polymers formed from these monomers can hydrolyze when used in aqueous systems.

EP-A-0 099 694 discloses a class of compounds characterised by the general formula

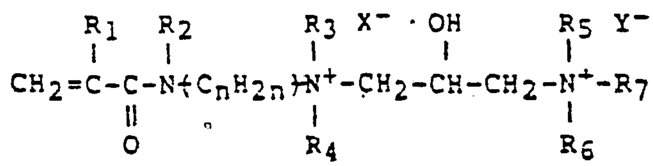

wherein $R_1$ and $R_2$ are hydrogen or methyl, $R_3$, $R_4$, $R_5$, $R_6$ and $R_7$ are the same or different alkyls of 1 to 4 carbon atoms, n is an integer ranging from 1 to 6, and X and Y are the same or different anions, and polymers of such compounds.

This invention pertains to certain cationic acrylamide monomers which contain three quaternary ammonium salt groups in each molecule, to a process for their preparation and to their use in polymers.

The monomers of this invention are characterized by the following formula :

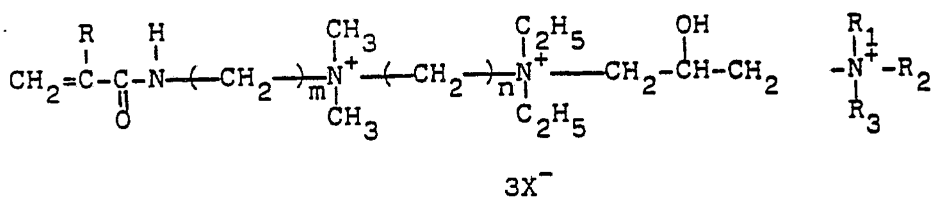

(I)

wherein R is H or $CH_3$ ; m and n are integers ranging from 2 to 4 ; $R_1$, $R_2$ and $R_3$ separately or together are $C_1$ to $C_4$ alkyl groups ; and each X is a halogen ion (they may be the same or different halogen ions).

These tris-quaternary ammonium monomers can be made by reacting dimethylaminoalkyl acrylamide or methacrylamide with diethylaminoalkyl halide hydrohalide followed by reaction with N(3-halo-2-hydroxypropyl) trialkylammonium halide or N-(glycidyl)trialkylammonium halide, in accordance with the following process.

The process comprises two steps : in the first step, the dimethylaminoalkyl acrylamide monomer is reacted with diethylaminoalkyl halide hydrohalide to form an intermediate acrylamide monomer which contains both a quaternary ammonium salt group and a tertiary amine group :

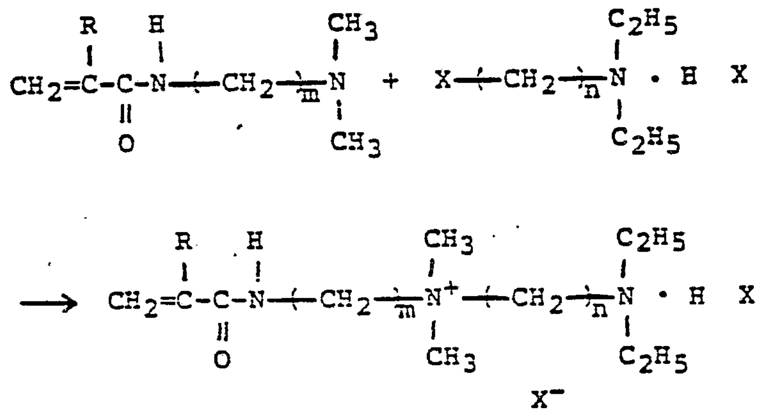

(II)

and in the second step, the intermediate monomer is reacted with N(3-halo-2-hydroxypropyl) trialkylammonium halide or N-(glycidyl) trialkylammonium halide to form the monomer of this invention :

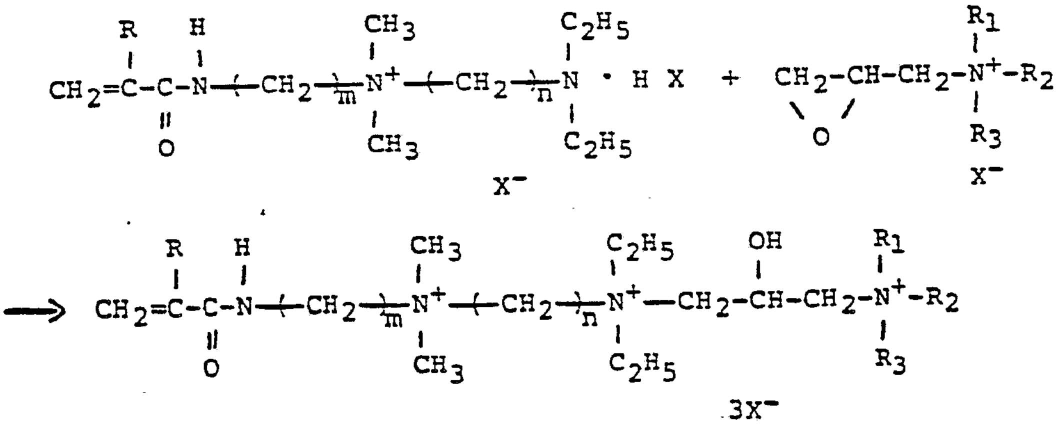

(III)

R, $R_1$, $R_2$, $R_3$, m, n, and X have the same meanings as set forth hereinbefore.

The synthesis can be conducted by dissolving the reactants in water or other inert polar solvent such as alcohols (for example methanol, ethanol, isopropanol, and butanol), acetonitrile, dimethylformamide, tetrahydrofuran, acetone or dioxane. Mixtures of water and one of the organic solvents can be used. The reaction is generally conducted at a temperature between 30 °C. and the reflux temperature of the reaction mixture. Preferably, the reaction is conducted at a temperature within the range of 40 °C. to 80 °C. The time of reaction varies between several minutes and several hours, depending mainly on the reaction temperature. In carrying out the reaction it is preferred to add one reactant slowly to the other in order to control the rate of reaction and any temperature rise which might take place. The reactants may be reacted together in approximately equal molar proportions.

As shown by the formulas in II, the first stage reaction involves the reaction of a tertiary amine substituted acrylamide monomer and a haloalkyltertiary amine. Examples of useful acrylamide monomers are dimethylaminoethyl acrylamide, dimethylaminoethyl methacrylamide, dimethylaminopropyl acrylamide, dimethylaminopropyl methacrylamide and dimethylaminobutyl methacrylamide. Examples of useful haloalkyltertiary amines are diethylaminooethyl chloride hydrochloride, diethylaminopropyl bromide hydrobromide and diethylaminobutyl iodide hydroiodide. It is important that the two alkyl substituents on the tertiary nitrogen group be ethyl groups. If they are methyl groups, then the tertiary amine is too reactive and interferes with the desired quaternization reaction, i. e., the reaction of the alkyl halide with the tertiary amine group on the acrylamide monomer. If the alkyl substituents are larger than ethyl groups, then the tertiary nitrogen is so sterically hindered that it cannot readily undergo quaternization in the subsequent reaction.

In the second stage of the reaction as shown by III, the product of the first stage is reacted with N-(glycidyl) trialkylammonium halide. Specific examples of such reactants are N-(glycidyl)trimethylammonium chloride, N-(glycidyl) triethyl-ammonium bromide, N-(glycidyl)tripropylammonium iodide, N-(glycidyl)methyl and dibutylammonium chloride. As an alternative to the glycidyl compound, the corresponding halohydrin compound can be used. Examples of such halohydrins are N(3-chloro-2-hydroxypropyl) trimethylammonium chloride and N(3-bromo-2-hydroxypropyl) triethylammonium iodide. When a halohydrin is used, a dehydrohalogenation agent, such as sodium hydroxide or potassium hydroxide, is used.

As shown by the formulas in I, II and III, all of the anions are of the halide type. i. e., chloride, bromide or iodide. These anions can be replaced in the composition of this invention with other anions using conventional techniques, such as by contacting the tris-quaternary halide acrylamide monomer with an appropriate ion exchange resin. Examples of such anions are hydroxide, nitrate, sulfate, phosphate, methosulfate, acetate, formate, oxalate and sulfamate.

The unsaturated tris-quaternary compounds of this invention can be polymerized readily. Any known polymerization initiator of the free radical type can be used. Examples of suitable initiators include t-butyl hydroperoxide, ammonium persulfate, alkali metal persulfates, the tetra sodium salt of ethylene diamine tetraacetic acid and 2,2'-azo-bis (2-amidinopropane) hydrochloride. The initiator is usually effective in quantities from 0.01 % to 5 % by weight based on the weight of monomer. A redox system can also be used by including a reducing agent such as sodium hydrosulfite or sodium formaldehyde sulfoxylate in the initiator system.

These tris-quaternary monomers can be copolymerized with other polymerizable olefinically unsaturated monomers, preferably, in aqueous solution or emulsion processes. Preferred comonomers are acrylamide monomers such as acrylamide or methacrylamide. Examples of other useful comonomers include acrylic and methacrylic acid, hydroxyethyl acrylate or methacrylate, hydroxypropyl acrylate or methacrylate, N-methylol methacrylamide and N-methylol methacrylamide.

Copolymers of the monomer of this invention can generally contain from 1 to 99 weight percent, based on the total copolymer weight, of comonomer. However, the preferred range is 5 to 70 weight percent comonomer where water-solubility and high charge densities are controlling factors and require the presence of a high amount of quaternary ammonium groups in the copolymers.

The polymers of this invention range from viscous to solid resinous materials of water-soluble character. The molecular weight of the polymers is generally in the range of 20 000 to 2 000 000. Preferably, the molecular weight is at least 500 000.

An important feature of the present invention is that the tris-quaternary monomers of the invention do not contain ester linkages. Homopolymers and copolymers of these monomers exhibit outstanding resistance to hydrolysis and chemical degradation. The homopolymers and copolymers are versatile in a wide range of applications under extreme conditions of temperature and chemical environment.

Polymeric compositions of the present invention can be incorporated into paper pulp to render it electroconductive for the production of paper stock for electrostatic image reproduction systems. A quantity of from 0.1 % to 10 % be weight of the polymer, based on dry fiber weight, can be added to the wood pulp. Pigments and other additives known and used in the paper art can also be included.

The polymeric compositions of the present invention are suitable for application for paper sizing and as wet strength agents. Copolymers containing from 1 % to 20 % by weight of the tris-quaternary ammonium monomer of this invention are useful for forming films and coatings having resistance to the development of electrostatic charges.

The water-soluble polymeric compositions of this invention are useful as flocculants, particularly those polymeric compositions which contain at least 60 % by weight of the tris-quaternary ammonium monomer. The addition of from 0.1 % to 10 % by weight of the polymer based on the weight of suspended solids (e. g., sewage sludge or paper pulp effluent) serves to flocculate the suspended matter and to facilitate filtration procedures.

The water-soluble polymeric compositions are useful in well drilling operations, particularly oil well drilling. The polymeric compositions are useful as clay stabilizers, in earth formation control and in sand and water control.

The following Examples illustrate the invention in more detail. Parts and percentages unless otherwise indicated are parts and percentages by weight.

## Example 1

To a suitable reactor equipped with an agitator ; thermometer, reflux condenser and dropping funnel were added 344.2 parts of diethylaminoethyl chloride hydrochloride and 340 parts of water. To the dropping funnel were added 340 parts of dimethylaminopropyl methacrylamide, 0.4 part of methylhydroquinone and 50 parts of water. Agitation was begun and when solution was obtained in the reactor, slow addition of the solution in the dropping funnel was begun. During this addition which was completed in 45 minutes, the exothermic temperature was not allowed to exceed 48 °C. When the addition was complete, the temperature was raised to 60 °C. and was held between 60° and 64 °C. for six hours. At the end of this heating period, the temperature was allowed to drop to room temperature.

To the dropping funnel were added 752 parts of a 50 % aqueous solution of N(3-chloro-2-hydroxypropyl) trimethylammonium chloride. This solution was added to the reactor over a 30 minutes period at room temperature. To the dropping funnel were added 160 parts of a 50 % aqueous sodium hydroxide solution. This solution was added over a thirty minute period with the temperature rising to 39 °C. due to the exothermic reaction. The temperature was then raised to 70 °C. and was held at 70 °C. for six hours. The reaction product was then cooled to room temperature and was stored in a glass container.

## Example 2

To a suitable reactor equipped as described in Example 1 were added 1 000 parts of the triquaternary amine salt monomer solution of Example 1, 0.3 part of the tetrasodium salt of ethylene diamine tetraacetic acid and 514 parts of water. To the dropping funnel were added 0.424 part of 2,2'-azo-bis(2-amidinopropane) hydrochloride and 300 parts of water. Nitrogen was introduced in the reactor reducing the oxygen content to less than 100 ppm. Agitation was begun and heat was applied. When the temperature reached 80 °C., slow addition of the catalyst solution from the dropping funnel was begun. The addition was continued for three hours while keeping the temperature at 80 °C. When the addition was completed, the temperature was held at 80 °C. for 30 minutes. 6.06 parts of tertiary butyl hydroperoxide and a solution of 0.49 part of sodium formaldehyde sulfoxylate in 10 parts of water were added. After one hour of heating at 80 °C., additional portions of 6.06 parts of tertiary butyl hydroperoxide and the solution of 0.49 part of sodium formaldehyde sulfoxylate in 10 parts were added. Heating at 80 °C. was continued for two hours. The resulting polymer solution had a solids content of 32.0 % and a viscosity of 1,400 cps at 25 °C.

## Example 3

Using the same procedure described in Example 1, diethylaminoethyl chloride hydrochloride was reacted with dimethylaminopropyl methacrylamide. The resulting quaternary amine, tertiary amine hydrochloride, was reacted with N(3-chloro-2-hydroxypropyl) trimethylammonium chloride again using the procedure described in Example 1 to form the tris-quaternary ammonium chloride monomer.

Using the procedure described in Example 2, 1 000 parts of the tris-quaternary ammonium chloride monomer solution described above, 0.1 part of the tetrasodium salt of ethylene diamine tetraacetic acid and 200 parts of water were added to a reactor equipped as described in Example 1. Oxygen was reduced below 100 ppm using a nitrogen flush, agitation was begun and heat was applied. When the temperature reached 80 °C., 0.6 part of 2,2′-azo-bis (2-amidinopropane) hydrochloride dissolved in 300 parts of water was added over a 3 hour period while holding the temperature at 80 °C. At the end of this heating period, a solution of 0.2 part of 2,2′-azo-bis(2-amidinopropane) hydrochloride in 15 parts of water was added. After 30 minutes at 80 °C., an additional solution of 2,2′-azo-bis(2-amidinopropane) hydrochloride in water in the same amounts was added. After one hour at 80 °C., still another solution of 2,2′-azo-bis (2-amidinopropane) hydrochloride in water in the same amounts was added. Heating at 80 °C. was then continued for 1 hour. The resulting polymer solution had a solids content of 39.33 % and a viscosity of 1 600 cps at 25 °C.

## Example 4

To a reactor equipped as described in Example 1 were added 170 parts of dimethylaminopropyl methacrylamide and 100 parts of water. To the dropping funnel were added 172.1 parts of diethylaminoethyl chloride hydrochloride and 172 parts of water. Agitation was begun and the temperature in the reactor was raised to 70 °C. Addition from the dropping funnel was begun and was continued over a 55 minutes period while holding the temperature between 67°-70 °C. Water, 5 parts, was added to the dropping funnel and into the reactor to wash in any residual reagent. Heating at 70 °C. was continued for 5 minutes. The resulting quaternary ammonium chloride monomer solution had a solids content of 57.3 % and a pH of 4.3.

To a suitable reactor were added 200 parts of the monomer solution described above and 63.8 parts of an aqueous solution. 71 % active, of N-(glycidyl)trimethylammonium chloride. Heat was applied raising the temperature to 70 °C. The temperature was held at 70°-74 °C. for six hours to complete the reaction. The resulting tris-quaternary chloride monomer solution had a solids content of 61.6 % and a pH of 7.24.

To a suitable reactor were added 100 parts of the monomer solution described in the preceding paragraph and 0.1 part of tetrasodium salt of ethylene diamine tetraacetic acid. The reactor was flushed with nitrogen and nitrogen was continuously introduced during the reaction. Agitation was begun and heat was applied raising the temperature to 80 °C. in 28 minutes. A solution of 0.1 part of 2,2′-azo-bis (2-amidinopropane) hydrochloride in 1 part of water was added. After 27 minutes heating at 80 °C., 50 parts of water were added to reduce the viscosity. After an additional 21 minutes at 80 °C., more water, 50 parts, was added to reduce the viscosity. After heating an additional hour and 12 minutes at 80 °C., a solution of 0.1 part of 2,2′-azo-bis(2-amidinopropane) hydrochloride in 1 part of water was added. Heating at 80 °C. was continued for 2 hours. The resulting clear, viscous, amber solution had a pH of 7.1.

## Claims

1. A compound of the formula :

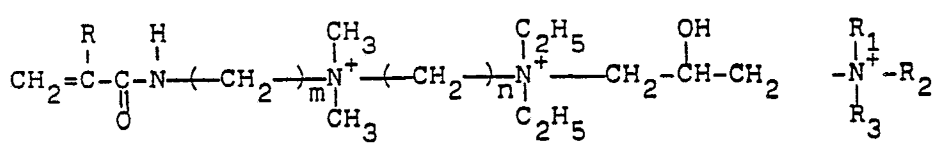

$3X^-$

wherein

R is H or $CH_3$,

$R_1$, $R_2$ and $R_3$ separately or together are $C_1$ to $C_4$ alkyl groups,

m and n are integers ranging from 2 to 4, and

X is a halogen ion, each X being the same as or different from the others.

2. The compound of the formula :

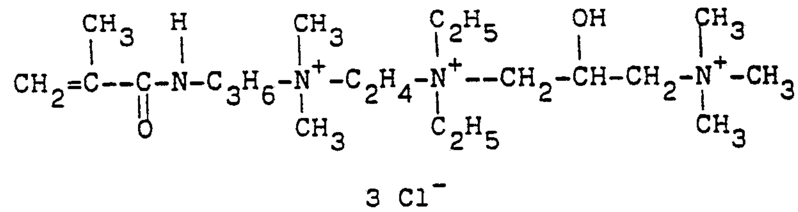

3. A homopolymer of a compound of claim 1 or 2.

4. A copolymer of a compound of claim 1 or 2 with at least one other olefinically unsaturated monomer.

5. The copolymer of claim 4 wherein the other olefinically unsaturated monomer is water-soluble.

6. The copolymer of claim 5 wherein the watersoluble monomer is acrylamide.

7. A process for preparing a compound of any of claims 1-3 which comprises

A) reacting a dimethylaminoalkyl acrylamide monomer with a diethylaminoalkyl halide hydrohalide to form an intermediate acrylamide monomer which contains a quaternary ammonium salt group and a tertiary amine group in accordance with the following scheme :

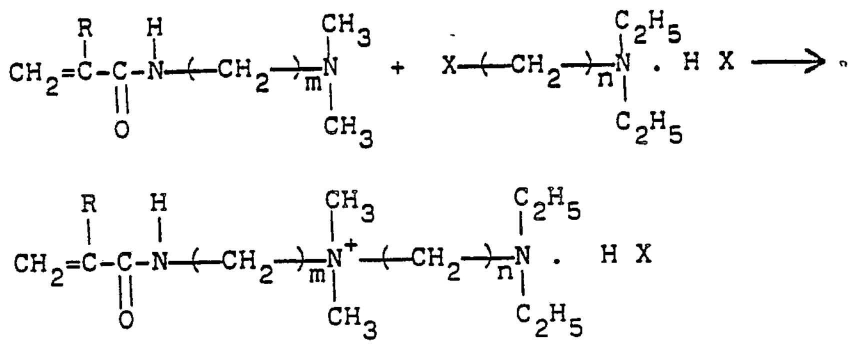

B) reacting the intermediate acrylamide monomer with N-(glycidyl) trialkylammonium halide to form the tris-quaternary ammonium polymerizable monomer in accordance with the following scheme :

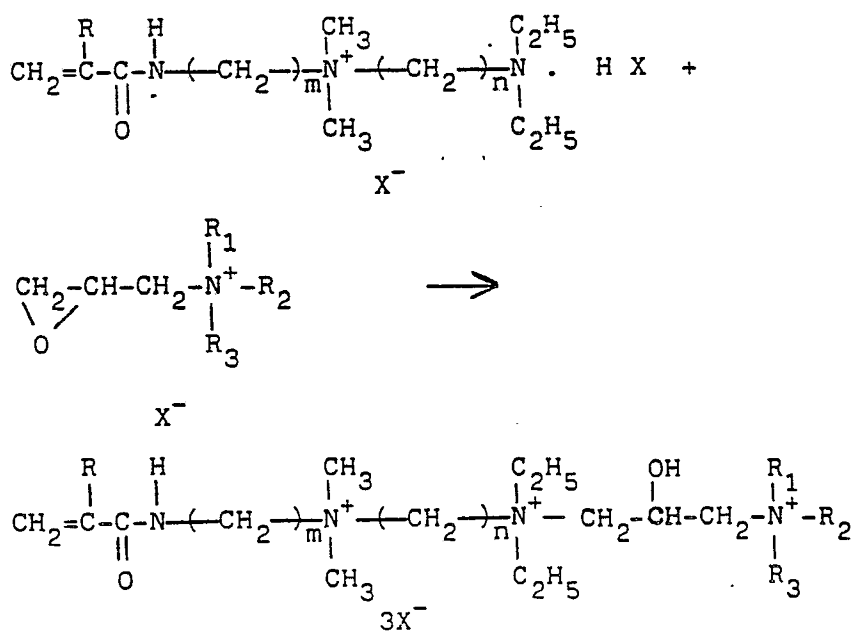

wherein R, $R_1$, $R_2$, $R_3$, m, n and X have the same meanings as in claim 1.

8. The process of claim 7 modified in that the N-(glycidyl)-trialkylammonium halide is replaced by the corresponding halohydrin compound using sodium hydroxide or potassium hydroxide as a dehydrohalogenating agent.

9. The process of claim 7 wherein R, $R_1$, $R_2$ and $R_3$ are $CH_3$ groups, m is the integer 3, n is the integer 2 and $X^-$ is chloride.

**Patentansprüche**

1. Verbindung der Formel

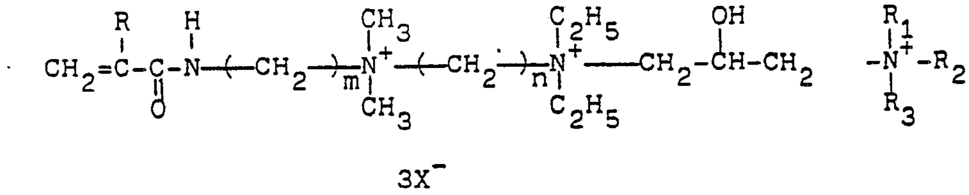

in der
R H oder $CH_3$ ist,
$R_1$, $R_2$ und $R_3$, einzeln oder gemeinsam $C_1$- bis $C_4$-Alkyl-Gruppen sind,
m und n ganze Zahlen von 2 bis 4 sind und
X ein Halogen-Ion ist, wobei die X jeweils gleich oder voneinander verschieden sind.

2. Verbindung der Formel

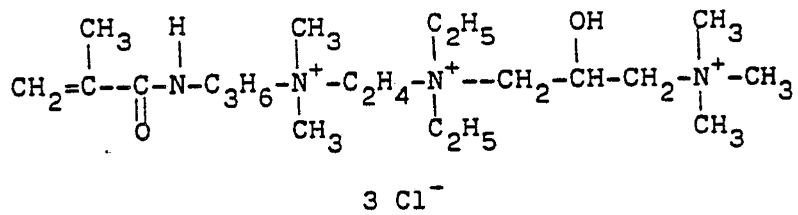

3. Homopolymer der Verbindung nach Anspruch 1 oder 2.

4. Copolymer einer Verbindung nach Anspruch 1 oder 2 mit wenigstens einem anderen, olefinisch ungesättigten Monomer.

5. Copolymer nach Anspruch 4, worin das andere, olefinisch ungesättigte Monomer wasserlöslich ist.

6. Copolymer nach Anspruch 5, worin das wasserlösliche Monomer Acrylamid ist.

7. Verfahren zur Herstellung einer Verbindung nach irgendeinem der Ansprüche 1 bis 3, umfassend

A) die Umsetzung eines Dimethylaminoalkylacrylamid-Monomers mit einem Diethylaminoalkylhalogenid-hydrohalogenid unter Bildung eines Acrylamid-Monomer-Zwischenprodukts, das eine quaternäre Ammoniumsalz-Gruppe und eine tertiäre Amino-Gruppe enthält, nach folgendem Schema

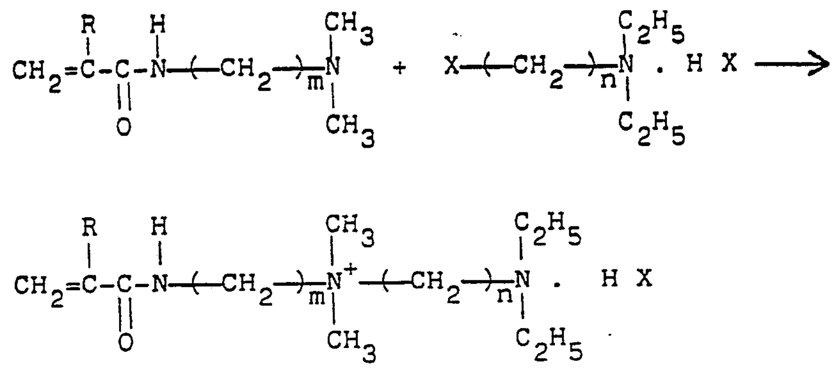

B) die Umsetzung des Acrylamid-Monomer-Zwischenprodukts mit N-(Glycidyl) trialkylammoniumhalogenid unter Bildung des polymerisierbaren tris-quaternären Ammonium-Monomers nach folgendem Schema

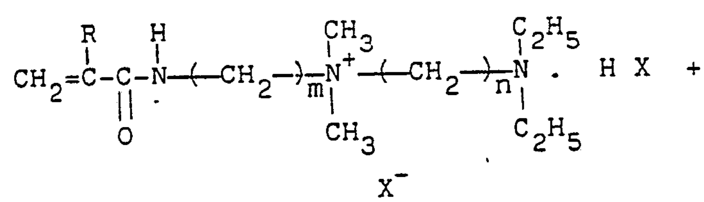

(Fortsetzung)

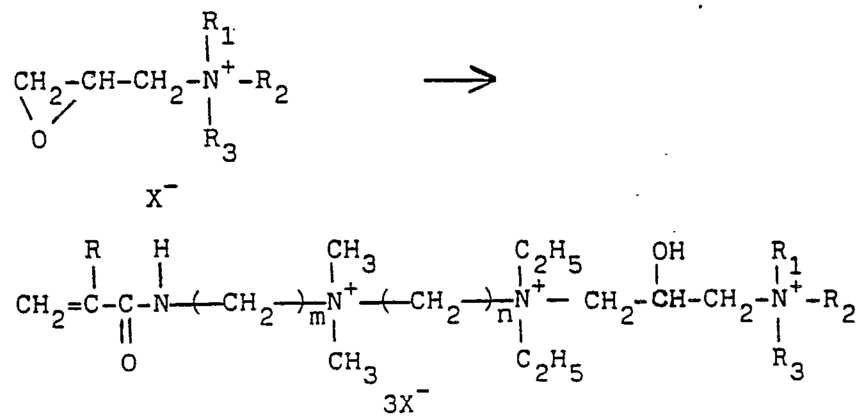

worin R, $R_1$, $R_2$, $R_3$, m, n und X die in Anspruch 1 angegebenen Bedeutungen haben.

8. Verfahren nach Anspruch 7, dahingehend modifiziert, daß das N-(Glycidyl) trialkylammoniumhalogenid durch die entsprechende Halogenohydrin-Verbindung ersetzt wird, wobei Natriumhydroxid oder Kaliumhydroxid als Dehydrohalogenierungsmittel eingesetzt wird.

9. Verfahren nach Anspruch 7, worin R, $R_1$, $R_2$ und $R_3$ $CH_3$- Gruppen sind, m die ganze Zahl 3 ist, n die ganze Zahl 2 ist und $X^-$ Chlorid ist.

**Revendications**

1. Composé de formule :

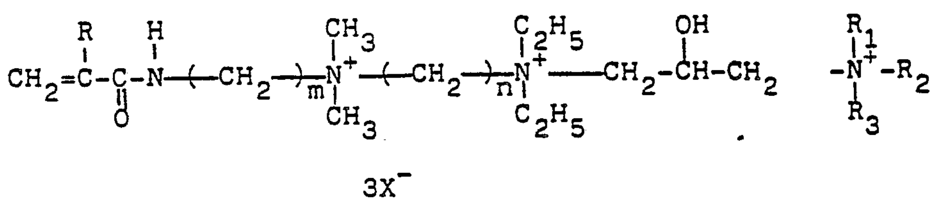

dans laquelle

R représente H ou $CH_3$,

$R_1$, $R_2$ et $R_3$ représentent ensemble ou séparément des groupes alkyles en $C_1$ à $C_4$,

m et n sont des entiers compris entre 2 et 4, et

X est un ion halogène, chacun des X étant identique ou différent des autres.

2. Composé de formule :

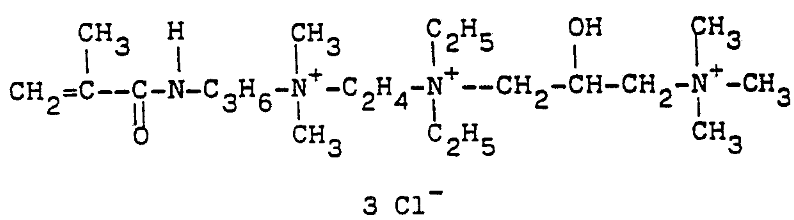

3. Homopolymère d'un composé selon la revendication 1 ou 2.

4. Copolymère d'un composé selon la revendication 1 ou 2, avec au moins un autre monomère oléfiniquement insaturé.

5. Copolymère selon la revendication 4, dans lequel l'autre monomère oléfiniquement insaturé est hydrosoluble.

6. Copolymère selon la revendication 5, dans lequel le monomère hydrosoluble est l'acrylamide.

7. Procédé de préparation d'un composé selon l'une des revendications 1 à 3, qui comprend

A) la réaction d'un monomère de diméthylaminoalkyl acrylamide avec un chlorhydrate d'halogénure de diéthylaminoalkyle pour former un monomère d'acrylamide intermédiaire qui contient un groupe de sel d'ammonium quaternaire et un groupe d'amine tertiaire selon le schéma suivant :

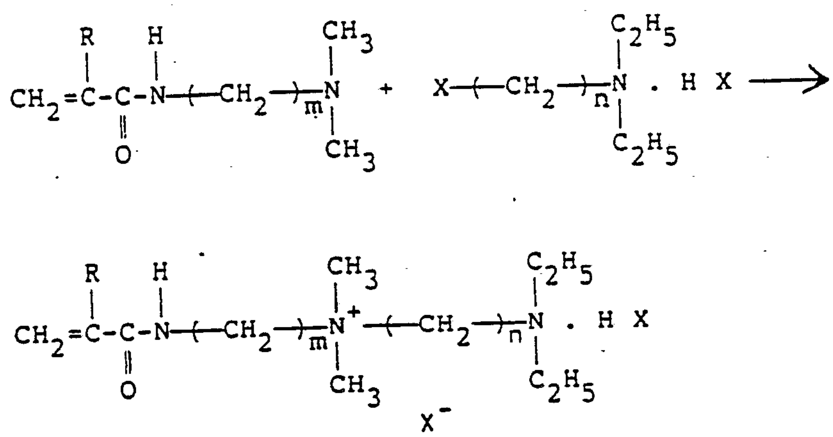

B) la réaction du monomère d'acrylamide intermédiaire avec un halogénure de N-(glycidyl) trialkylammonium pour former le monomère polymérisable de tris-ammonium quaternaire selon le schéma suivant :

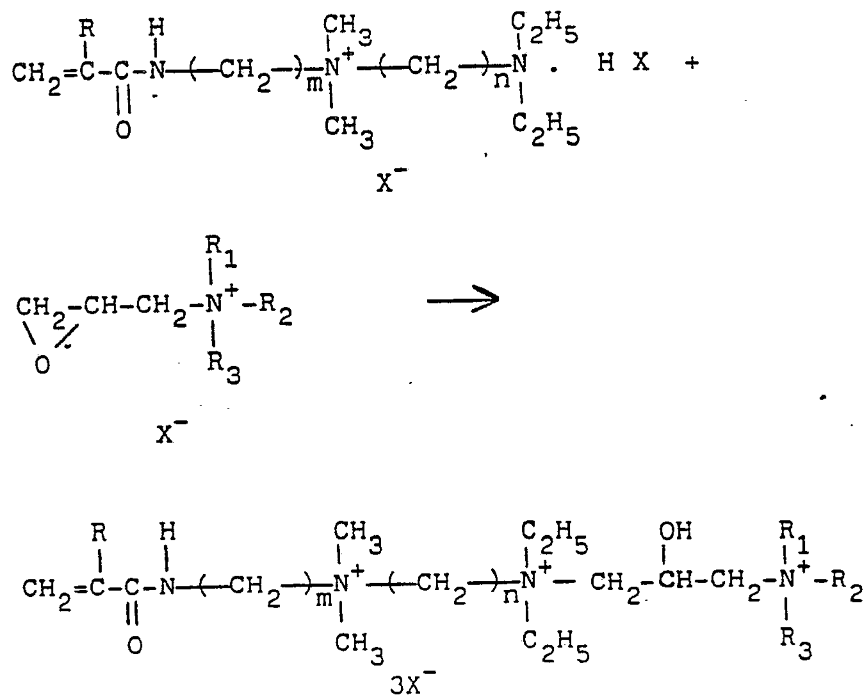

dans lequel R, $R_1$, $R_2$, $R_3$, m, n et X ont les mêmes significations que dans la revendication 1.

8. Procédé selon la revendication 7 modifié en ce que l'halogénure de N-(glycidyl)-trialkylammonium est remplacé par le composé d'halogénohydrine correspondant en utilisant en tant qu'agent de déshydrohalogénation l'hydroxyde de sodium ou l'hydroxyde de potassium.

9. Procédé selon la revendication 7, dans lequel R, $R_1$, $R_2$ et $R_3$ sont des groupes $CH_3$, m est l'entier 3, n est l'entier 2 et $X^-$ est un chlorure.